(19) Europäisches Patentamt
European Patent Office
Office européen des brevets

(11) EP 0 840 645 B1

(12) EUROPÄISCHE PATENTSCHRIFT

(45) Veröffentlichungstag und Bekanntmachung des Hinweises auf die Patenterteilung:
03.11.2004 Patentblatt 2004/45

(51) Int Cl.⁷: B01D 71/42

(21) Anmeldenummer: 96920727.3

(86) Internationale Anmeldenummer:
PCT/DE1996/001156

(22) Anmeldetag: 29.06.1996

(87) Internationale Veröffentlichungsnummer:
WO 1997/003747 (06.02.1997 Gazette 1997/07)

(54) **MEMBRANEN AUS POLYACRYLNITRIL**

POLYACRYLONITRILE MEMBRANES

MEMBRANES EN POLYACRALONITRILE

(84) Benannte Vertragsstaaten:
AT CH DE FR GB LI NL

(30) Priorität: 18.07.1995 DE 19526094

(43) Veröffentlichungstag der Anmeldung:
13.05.1998 Patentblatt 1998/20

(73) Patentinhaber: GKSS-Forschungszentrum
Geesthacht GmbH
21502 Geesthacht (DE)

(72) Erfinder:
• BUSCHATZ, Heinz
D-14480 Potsdam (DE)
• PAUL, Dieter
D-14532 Kleinmachnow (DE)
• PETERS, Gerda
D-14513 Teltow (DE)
• SCHARNAGL, Nico
D-21514 BÜCHEN (DE)
• HICKE, Hans-Georg
D-14513 Teltow (DE)

(74) Vertreter: Niedmers, Ole, Dipl.-Phys.
propindus
Patentanwälte
NIEDMERS JAEGER KÖSTER
Van-der-Smissen-Strasse 3
22767 Hamburg (DE)

(56) Entgegenhaltungen:
EP-A- 0 061 782          DE-A- 2 742 588

**Beschreibung**

Die Erfindung betrifft eine mechanisch stabile, wasserdurchlässige Membran aus Polyacrylnitril, die bei einem vorgebbaren Betriebsdruck betreibbar ist.

Aus EP-A-0 061 782 ist eine Komposit-Membran bekannt, deren Träger unter anderem aus Polyacrylnitril PAN bestehen kann, wobei eine mechanische Stabilität und eine Chlor-Widerstandsfähigkeit mittels der bekannten Membran erreicht werden soll.

Poröse, ebenflächige Membranen aus Polyacrylnitril werden zur Trennung von Stoffgemischen nach dem Siebmechanismus bei der Ultrafiltration oder als Trägerschichten für Komposit-Membranen benutzt, die je nach Art der aufgebrachten trennaktiven Schicht für die Umkehrosmose oder Pervaporation eingesetzt werden, man vergleiche DE-C-42 34 521.

Werden derartige Membranen als Trägerschichten für Umkehrosmose- und Pervaporations-Membranen eingesetzt, dann müssen die Membranen einerseits eine ausreichend hohe Porosität aufweisen, die für den Permeanden einen möglichst niedrigen Widerstand darstellt. Andererseits müssen diese Membranen sowohl dem anliegenden Betriebsdruck als auch Schwankungen des Druckes ohne Beeinträchtigung ihrer Leistungsfähigkeit standhalten. Zudem müssen sie im Falle von Komposit-Membranen kompatibel mit der aufzubringenden Trennschicht sein.

Polyacrylnitril (PAN) besitzt eine Reihe von Vorteilen gegenüber anderen Membranpolymeren. So ist PAN nicht nur gegenüber vielen Lösungsmitteln resistent, sondern neigt auch weniger zum sogenannten Fouling.

Zur Herstellung einer PAN-Membran wird das Membranpolymer in einem Lösungsmittel, zumeist Dimethylformamid (DMF), gelöst und auf einer Unterlage, beispielsweise einem Polyestervlies, zu einem dünnen Film ausgezogen. Der Gießfilm wird nach einer Verweilzeit an der Luft in ein Fällbad eingetaucht, in welchem der Film ausgefällt wird (DD-A-299 276). Dabei bildet sich die feste Struktur der Membran aus.

Nach Beendigung des Fällvorganges werden die Membranen einige Stunden in frischem Wasser gespült, um noch vorhandene Lösungsmittelreste zu entfernen.

Die so hergestellten Membranen können mit Hilfe spezieller Nachbehandlungen getrocknet werden. Prinzipiell kann durch Variation der Herstellungsbedingungen ein Spektrum von Membranen mit verschiedenen durchschnittlichen Porendurchmessern $d_{50}$ = 2 bis 70 nm erzeugt werden. Die Einheit $d_{50}$ bedeutet dabei den mittleren Porendurchmesser bei einer Rückhaltung von 50 %.

Die bisher bekannten PAN-Membranen bestehen aus Homooder Copolymeren mit Molmassen von $M_\eta$ von ca. 100 000 g/mol. In vielen Fällen liegt die Molmasse des Membranpolymers noch niedriger. Die daraus gebildeten Membranen sind mechanisch meist nicht sehr stabil, so daß unter dem Einfluß des Betriebsdruckes eine Strukturverdichtung (Kompaktion) stattfindet. Diese Kompaktion ist mit einem Permeabilitätsabfall verbunden.

Zudem ist bei den bekannten Membranen die Flexibilität auch nicht immer ausreichend, so daß es bei Druckschwankungen zu Rissen in der Membran kommen kann.

Um die Kompaktionsstabilität zu erhöhen, wurde bereits vorgeschlagen, stabilitätserhöhende Stoffe, beispielsweise Bentonite (Th. Finken: Bentonite-stabilized CDA/CTA Membranes: Improved long-term transport properties. Desalination 48 (1983) 207-221), zur Gießlösung zuzumischen. Dies ist jedoch insofern nachteilig, als ein zusätzlicher Prozeßschritt erforderlich ist, der zudem auch noch den Zustand der Gießlösung ungünstig beeinflussen kann.

Aufgabe der vorliegenden Erfindung ist es, eine mechanisch stabilere Membran auf Basis von Polyacrylnitril bereitzustellen, die über eine hohe mechanische Widerstandsfähigkeit und insbesondere über eine hohe Kompaktionsstabilität in druckgetriebenen Prozessen verfügt.

Gelöst wird diese Aufgabe gemäß der Erfindung dadurch, daß der m-Wert für eine Kompaktion ≥ 0,07 bei einer anfänglichen Wasserdurchlässigkeit von ca. 2 000 l/m²h und einem Betriebsdruck von 0,3 MPa beträgt, wobei die Molmasse $M_\eta$ des Membranpolymers > als 130 000 g/mol ist.

Es wurde nämlich überraschend gefunden, daß man bei Verwendung von Membranpolymeren mit einer wesentlich höheren Molmasse als den bisher eingesetzten Membranpolymeren eine PAN-Membran mit einer wesentlich größeren mechanischen Stabilität erhalten kann. So konnte beispielsweise aus PAN mit der Molmasse $M_\eta$: 300 000 g/mol und bei Verwendung von Dimethylformamid als Lösungsmittel eine Membran erhalten werden, die im Vergleich zu einer Membran aus PAN mit einer Molmasse $M_\eta$: 130 000 g/mol mechanisch wesentlich stabiler ist.

Bei der erfindungsgemäßen Membran kann es sich um ein PAN-Homopolymer oder um ein PAN-Copolymer handeln. Als Comonomere im Membranpolymer kommen Vinylacelat, Methylacrylat, Itaconsäure und/ oder Allylsulfonat vorzugsweise in Betracht. Das Comonomer oder das Comonomergemisch machen vorzugsweise bis zu 10 Ma % des Polymers aus.

Die erfindungsgemäße PAN-Membran zeichnet sich insbesondere dadurch aus, daß sie über eine hohe Porosität und eine hohe mechanische Stabilität, insbesondere hinsichtlich der Kompaktion, verfügt.

Die Kompaktionsneigung kann beschrieben werden durch eine von Lonsdale für UO-Membranen empirisch gefundene Beziehung zwischen der Wasserdurchlässigkeit $J_w$ und der Zeit t, während der die Membran dem Betriebsdruck ausgesetzt war (Lonsdale, H. K.: Theory and Practice of Reverse Osmosis and Ultrafiltration in R.E. Lacy and S. Loeb: Industrial Processing with Membranes, Wiley- Interscience, New York, 1972, S. 140-144). Diese Beziehung lautet:

$$\lg J_w = A + m \lg t$$

Als Maßzahl für die Kompaktion wird häufig der Parameter m angegeben. Er trägt ein negatives Vorzeichen. Je geringer sich die Membrankompaktion auswirkt, desto näher liegt der m-Wert bei Null.

Bei der Herstellung der erfindungsgemäßen PAN-Membran wird die Molmasse des Membranpolymers derart gewählt, daß der m-Wert für die Kompaktion bei der fertigen erfindungsgemäßen PAN-Membran bei einer anfänglichen Wasserdurchlässigkeit von ca. 2 000 l/m²h bei einem Betriebsdruck von 0,3 MPa nicht weniger als -0,07 beträgt. Der m-Wert liegt somit im Bereich von 0,0 bis -0,07 einschließlich, z.B. -0,06 bei der Membran des Beispiels 1.

Die erfindungsgemäße PAN-Membran ist druckstabil, kompatibel mit den aufgebrachten trennaktiven Schichten und variabel einstellbar hinsichtlich der Trennleistung. Zudem kann die erfindungsgemäße PAN-Membran gemäß den bisher bekannten Verfahren zur Herstellung von PAN- Membranen erhalten werden, wobei das Verfahren nicht durch zusätzliche Prozeßschritte aufwendiger wird. Zudem wird durch die längeren Polymerketten im Vergleich zu PAN mit niedriger Molmasse auch bei geringeren Polymerkonzentrationen in der Gießlösung noch eine für den Gießprozeß ausreichend hohe Viskosität erreicht.

Bei erfindungsgemäßen Membran handelt es sich somit um eine kompaktionsstabilere Membran, mit der es möglich ist, Ultrafiltrationsprozesse und nach entsprechender Beschichtung auch Umkehrosmose- und Pervaporationsprozesse effektiv und langzeitstabil zu betreiben.

Die Erfindung wird im folgenden anhand der folgenden Beispiele näher erläutert.

BEISPIEL 1

Aus einem PAN-Polymerisat, chemische Zusammensetzung: 99 % Acrylnitril, ca. 1 % Methylacrylat, Molmasse $M_\eta$: 300 000 g/mol, $M_n$: 47 000 g/mol wurde bei 70°C eine Lösung in DMF mit einem Polymergehalt von 14 Ma.-% hergestellt, die dann als 150 µm starker Gießfilm auf ein Polyestervlies aufgetragen und nach einer Verweilzeit von ca. 5 s in einem auf 20°C temperierten Wasserbad als Membran (erfindungsgemäße Membran) gefällt wurde. Nach einer intensiven Wäsche wurde die Membran einem Trocknungsprozeß unterworfen.

Im Vergleich dazu wurde auf dem gleichen Wege eine Membran aus einem Polymer, chemische Zusammensetzung: 99 % Acrylnitril, ca. 1 % Vinylacetat, Molmasse $M_\eta$: 130 000 g/mol, $M_n$: 36 000 g/mol, hergestellt (Vergleichsmembran 1). Um Membranen mit annähernd gleicher Wasserdurchlässigkeit zu erhalten, betrug die Polymerkonzentration in der Gießlösung in diesem Falle 15 Ma.-%.

Die m-Werte für die beiden annähernd gleich leistungsstarken Membrantypen betragen bei einem Betriebsdruck von 3 bar -0,06 (erfindungsgemäße Membran) bzw. -0,15 (Vergleichsmembran). Die erfindungsgemäße Membran war also bedeutend druckstabiler.

Die erfindungsgemäße Membran wurde mit einem Polyelektrolyten beschichtet, der auch nach 20 Druckwechseln zwischen 0,1 und 1 MPa noch stabil haftete. Die Vergleichsmembran erwies sich bei der gleichen Behandlung als weniger druckstabil, was sich in einem stärkeren Permeabilitätsabfall gegenüber der erfindungsgemäßen Membran sowie in der Beeinträchtigung der trennaktiven Schicht an den Stellen bemerkbar machte, an denen die Membran im Modul besonderen Beanspruchungen infolge der Druckwechsel ausgesetzt war.

BEISPIEL 2

Zur Herstellung einer weiteren Vergleichsmembran wurde, wie im Beispiel 1 beschrieben, eine Membran aus einer Gießlösung hergestellt, die 14 Ma.-% des Polymers mit der niederen Molmasse ($M_\eta$: 130 000 g/mol, $M_n$: 36 000 g/mol) enthielt (Vergleichsmembran 2). Bei dieser Vergleichsmembran 2 ist bei einem m-Wert von -0,37 die Kompaktion erheblich größer als bei der erfindungsgemäßen Membran und bei der Vergleichsmembran 1. Dies bedeutet, ausgedrückt in absoluten Werten, daß die anfängliche Wasserdurchlässigkeit einer frischen Membran von 1.970 l/m²h in den ersten 60 min auf einen Wert von 473 l/m²h abfällt.

**Patentansprüche**

1. Mechanisch stabile, wasserdurchlässige Membran aus Polyacrylnitril, die bei einem vorgebbaren Betriebsdruck betreibbar ist, **dadurch gekennzeichnet, daß** der m-Wert für eine Kompaktion ≥ -0,07 bei einer anfänglichen Wasserdurchlässigkeit von ca. 2 000 l/m²h und einem Betriebsdruck von 0,3 MPa beträgt, wobei die Molmasse $M_\eta$ des Membranpolymers > als 130 000 g/mol ist.

2. Membran nach Anspruch 1, **dadurch gekennzeichnet, daß** das Membranpolymer PAN-Homopolymer ist.

3. Membran nach Anspruch 1, **dadurch gekennzeichnet, daß** das Membranpolymer PAN-Copolymer ist.

4. Membran nach einem oder mehreren der Ansprüche 1 bis 3, **dadurch gekennzeichnet, daß** das Membranpolymer ein Copolymer oder ein Copolymergemisch enthält.

5. Membran nach Anspruch 4, **dadurch gekennzeichnet, daß** ein Comomomer oder ein Comono-mergemisch durch im Membranpolymer enthalte-nes Vinylacelat, Methylacrylat, Itaconsäure und/oder Allylsulfonat gebildet wird.

6. Membran nach einem oder beiden der Ansprüche 4 oder 5, **dadurch gekennzeichnet, daß** das Comonomer oder das Comonomergemisch bis zu 10 Ma % des Membranpolymers umfaßt.

**Claims**

1. Mechanically stable, water-permeable polyacrylonitrile membrane that can be operated at a pre-determinable operating pressure, **characterized in that** the m-value for compaction amounts to $\geq$ û 0.07 at an initial water permeability of approx. 2,000 l/m$^2$h and an operating pressure of 0.3 MPa, whereby the molar mass $M_\eta$ of the membrane polymer is > 130,000.

2. Membrane according to Claim 1, **characterized in that** the membrane polymer is PAN homopolymer.

3. Membrane according to Claim 1, **characterized in that** the membrane polymer is PAN copolymer.

4. Membrane according to one or more of the Claims 1 to 3, **characterized in that** the membrane polymer contains a copolymer or a copolymer mixture.

5. Membrane according to Claim 4, **characterized in that** a comonomer or a comonomer mixture is formed by vinyl acetate, methyl acrylate, itaconic acid and/or allyl sulphonate contained in the membrane polymer.

6. Membrane according to one or both of the Claims 4 or 5, **characterized in that** the comonomer or the comonomer mixture comprises up to 10 Ma % of the membrane polymer.

**Revendications**

1. Membrane de polyacrylonitrile perméable à l'eau, mécaniquement stable, exploitable à une pression de service fixée auparavant, **caractérisée en ce que** la valeur m de compactage est $\geq$ -0,07 à une perméabilité à l'eau initiale d'environ 2 000 l/m$^2$h et à une pression de service de 0,3 mPa, la masse molaire $M_\eta$ du polymère membranaire est >130 000 g/mole.

2. Membrane selon la revendication 1, **caractérisée en ce que** le polymère membranaire est un homopolymère PAN.

3. Membrane selon la revendication 1. **caractérisée en ce que** le polymère membranaire est un copolymère PAN.

4. Membrane selon une ou plusieurs des revendications 1 à 3, **caractérisée en ce que** le polymère membranaire renferme un copolymère ou un mélange de copolymères.

5. Membrane selon la revendication 4, **caractérisée en ce qu'**on forme un comonomère ou un mélange de comonomères à l'aide de l'acétate de vinyle, d'acrylate de méthyle, de l'acide itaconique et/ou sulfonate d'allyle contenus dans le polymère membranaire.

6. Membrane selon une ou les deux revendications 4 ou 5, **caractérisée en ce que** le comonomère ou le mélange de comonomères comprend jusqu'à 10 % en masse du polymère membranaire.